# EUROPEAN PATENT SPECIFICATION

(11) **EP 3 473 890 B1**
(45) Date of publication and mention of the grant of the patent: **17.06.2020**
(21) Application number: 18200283.2
(22) Date of filing: 13.10.2018
(51) Int. Cl.: F16H 7/06

(54) **DRIVE MODULE**
ANTRIEBSMODUL
MODULE D'ENTRAÎNEMENT

(30) Priority: 17.10.2017 US 201762573200 P
(43) Date of publication of application: 24.04.2019
(73) Proprietor: Borgwarner Inc., Auburn Hills, Michigan 48326 (US)
(72) Inventor: FLEISHMAN, Steven M., Ithaca, NY 14850 (US); LOVE, Richard J., Newfield, NY 14867 (US); ACKLER, Daniel L., Cortland, NY 43045 (US)
(74) Representative: Peterreins Schley

(56) References cited:
- EP-A1- 2 483 142
- US-A1- 2011 114 406
- US-A1- 2014 066 242

## Description

### FIELD

The present disclosure relates to a drive module for use in a vehicle driveline.

### BACKGROUND

There is an increasing demand for low-cost electrically-powered axles for propelling automotive vehicles. US Patent No. 7458433B2 discloses a drive unit assembly for a vehicle that includes an electric motor that drives an epicycloid gear reduction through a chain and sprocket assembly. While such drive unit assembly is suited for its intended purpose, gear reductions, such as the epicycloid gear reduction disclosed in this patent, can be relatively expensive and may not provide the degree of flexibility in the placement of the electric motor and the output axis of the axle assembly. Additionally, the European patent No. EP2483142B1 discloses a transmission with three chains for a vehicle with an electric motor according to the preamble of claims 1 and 9.

### SUMMARY

This section provides a general summary of the disclosure, and is not a comprehensive disclosure of its full scope or all of its features.

In one form, the present disclosure provides a drive module having a housing, an input shaft, a first sprocket, an intermediate shaft, a second sprocket, a first chain, a third sprocket, an output member, a fourth sprocket and a second chain. The housing has a first housing member and a second housing member that is fixedly but removably coupled to the first housing member. The first and second housing members cooperate to define an internal cavity. The input shaft is supported in the housing for rotation about a first axis. The first sprocket is coupled to the input shaft for rotation therewith. The intermediate shaft is supported in the housing for rotation about a second axis that is parallel to the first axis. The second sprocket is coupled to the intermediate shaft for rotation therewith. The first chain is disposed about and engages the first and second sprockets. The first sprocket, the second sprocket and the first chain provide a first reduction ratio. The third sprocket is coupled to the intermediate shaft for rotation therewith. The output member is supported in the housing for rotation about a third axis that is parallel to the second axis. The fourth sprocket is coupled to the output member for rotation therewith. The second chain is disposed about and engages the third and fourth sprockets. The third sprocket, the fourth sprocket and the second chain provide a second reduction ratio.

The housing further comprises a bearing plate that defines a first annular bearing pocket and a second annular bearing pocket, wherein a first bearing is received in the first annular bearing pocket and supports the input shaft for rotation about the third axis, wherein a second bearing is received in the second annular bearing pocket and supports the output member for rotation about the third axis, and wherein a plurality of threaded fasteners fixedly but removably couple the bearing plate to the first housing member.

In another form, the present disclosure provides a drive module that includes a housing, a first shaft, first and second sprockets, a first chain, a reduction drive, a differential and a pair of output shafts. The housing has a first housing member and a second housing member that is fixedly but removably coupled to the first housing member. The first and second housing members cooperate to define an internal cavity. The first shaft is supported in the housing for rotation about a first axis. The first sprocket is coupled to the input shaft for rotation therewith. The second sprocket is supported in the housing for rotation about a second axis that is parallel to the first axis. The first chain is disposed about and engages the first and second sprockets. The first sprocket, the second sprocket and the first chain provide a first reduction ratio. The reduction gear drive has a reduction drive input, which is driven by the second sprocket, and a reduction drive output. The differential (24b) has a differential input (250) and a pair of differential outputs (256). The differential input is rotatably coupled to the reduction drive output. Each of the differential outputs is rotatable about the second axis. Each of the output shafts is rotatably coupled to an associated one of the differential outputs.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a schematic cross-sectional view of an exemplary drive module constructed in accordance with the teachings of the present disclosure;
Figure 2 is a perspective, partly sectioned view of a portion of the drive module of Figure 1;
Figure 3 is a perspective view of a portion of the drive module of Figure 1;
Figure 4 is a top plan view of a portion of the drive module of Figure 1;
Figure 5 is a longitudinal cross-sectional view of the portion of the drive module illustrated in Figure 4;
Figure 6 is a perspective view of a portion of a second drive module constructed in accordance with the teachings of the present disclosure;
Figure 7 is a perspective view of a portion of a third drive module constructed in accordance with the teachings of the present disclosure;
Figure 8 is a top plan view of the portion of the drive module illustrated in Figure 7; and
Figure 9 is an exploded perspective view of a portion of the drive module of Figure 7.

Corresponding reference numerals indicate corresponding parts throughout the several views of the drawings.

### DETAILED DESCRIPTION

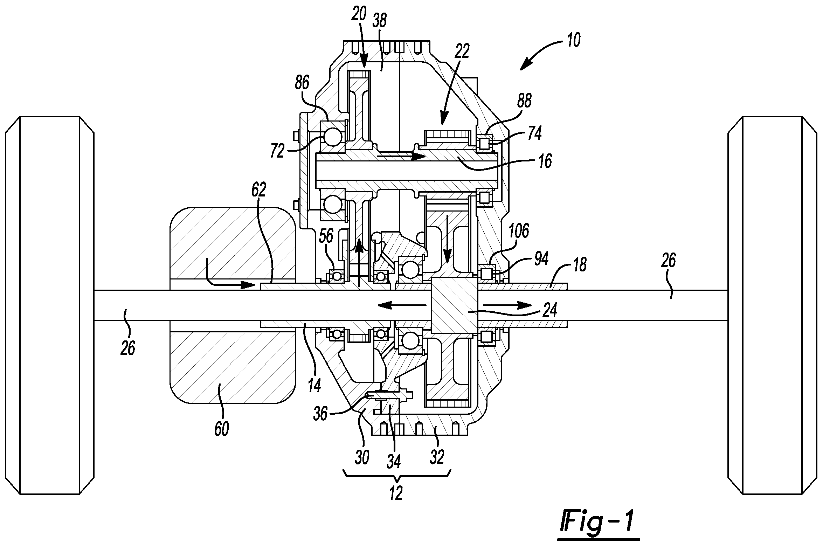

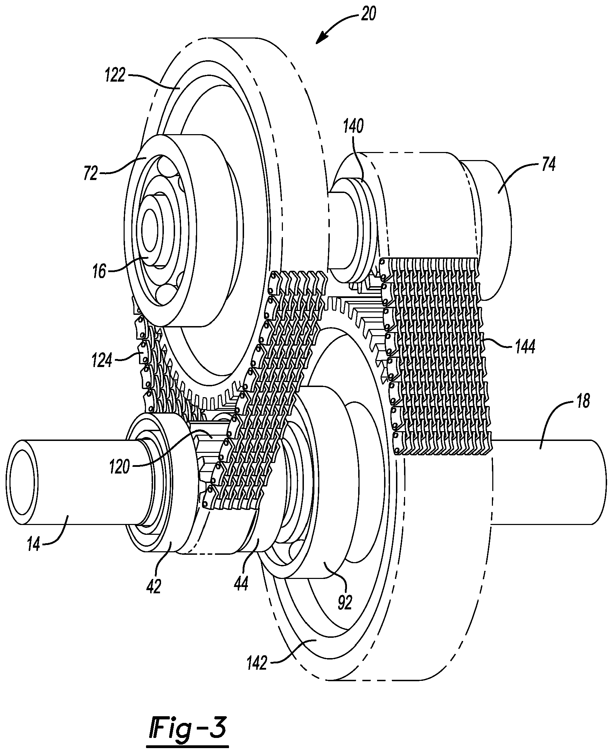

With reference to Figures 1 through 3, an exemplary drive module constructed in accordance with the teachings of the present disclosure is generally indicated by reference numeral 10. The drive module 10 can include a housing 12, an input shaft 14, an intermediate shaft 16, an output shaft 18, a first reduction drive 20, a second reduction drive 22, a differential 24, and a pair of half shafts 26.

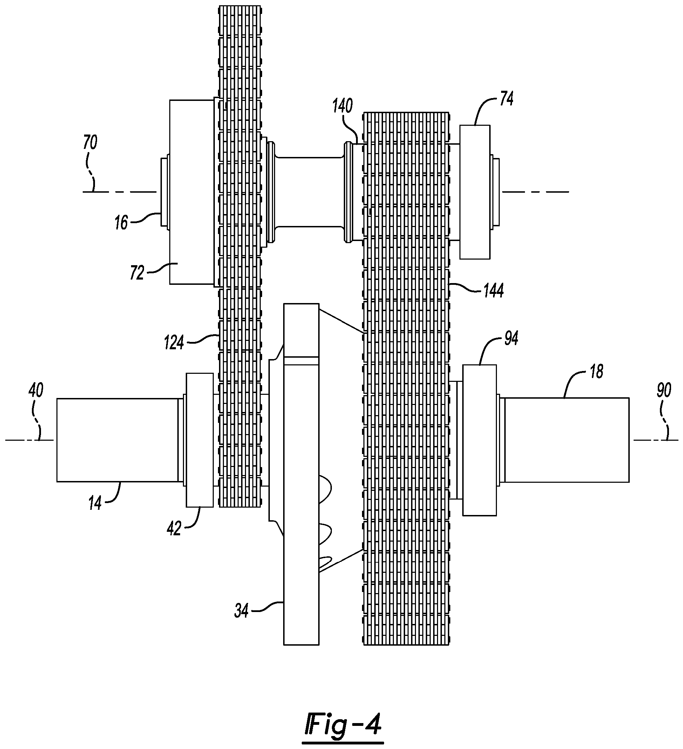

With reference to Figures 1, 4 and 5, the housing 12 can comprise first and second housing members 30 and 32, respectively, and a bearing plate 34 that is fixedly coupled to the first housing member 30 via a plurality of threaded fasteners 36. If desired, one or more locating elements, such as dowels (not shown), can be employed to precisely locate the bearing plate 34 to the first housing member 30. The first and second housing members 30 and 32 can mate together in a clam-shell fashion and can define an internal cavity 38 in which the first and second reduction drives 20 and 22 and the differential 24 can be received and in which the input shaft 14, the intermediate shaft 16, the output shaft 18 and the half shafts 26 can be rotatably received.

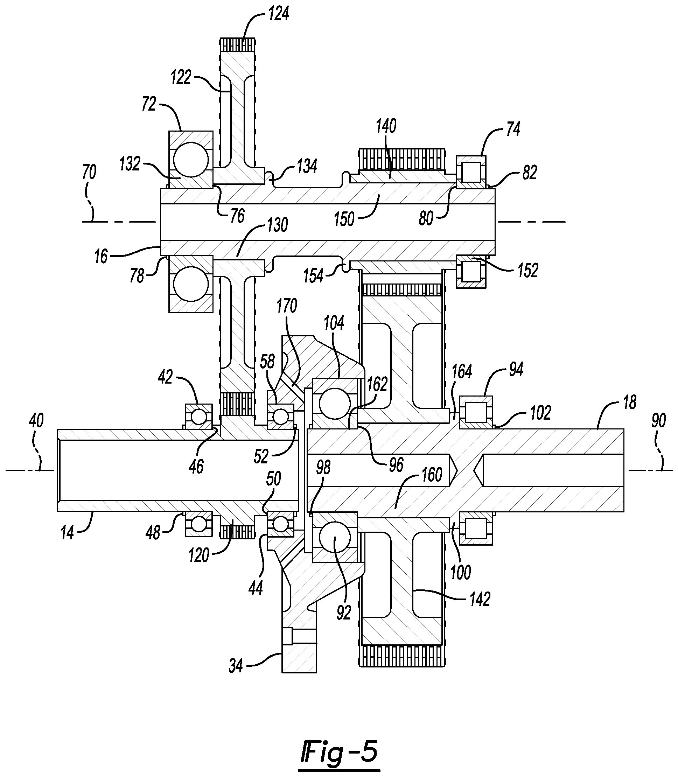

The input shaft 14 can be a hollow, tubular structure that can be rotatably supported relative to the housing 12 about an input axis 40 by a first bearing 42 and a second bearing 44. In the example provided, the first and second bearings 42 and 44 comprise ball bearings. The first bearing 42 can be received onto the input shaft 14, abutted against a first shoulder 46 (Fig. 5) formed on the input shaft 14 and fixed to the input shaft 14 to inhibit or limit axial movement of the first bearing 42 along the input shaft 14 by a first retaining ring 48 (Fig. 5). Similarly, the second bearing 44 can be received onto the input shaft, abutted against a second shoulder 50 (Fig. 5) that is axially spaced along the input axis 40 from the first shoulder 46, and fixed to the input shaft 14 to inhibit or limit axial movement of the second bearing 44 along the input shaft 14 by a second retaining ring 52 (Fig. 5). The first bearing 42 can be received into a first annular pocket 56 (Fig. 1), which is formed into the first housing member 30, while the second bearing 44 can be received into a second annular pocket 58 (Fig. 5) that is formed in the bearing plate 34. The input shaft 14 is configured to receive rotary power from an appropriate power source, which is shown as an electric motor 60 (Fig. 1) in the example provided. The electric motor 60 can be fixedly coupled to the housing 12. If desired, the electric motor 60 can have an annular rotor 62 (Fig. 1) that can be disposed coaxial with the input shaft 14 and a first one of the half shafts 26 to limit the volume into which the drive module 10 is disposed. The input shaft 14 can be coupled to the rotor 62 in any desired manner. For example, the input shaft 14 could be unitarily and integrally formed with or permanently fixed (axially and rotationally) to a portion of the rotor 60, or could be coupled to the rotor via a coupling of the type that permits the electric motor 60 to be disassembled from the input shaft 14. Such couplings could comprise mating male and female spline connections formed onto the input shaft 14 and the rotor 60 (or a structure that is coupled to the rotor 60 for rotation therewith).

The intermediate shaft 16 can be rotatably supported relative to the housing 12 about an intermediate axis 70 by a third bearing 72 and a fourth bearing 74. The intermediate axis 70 can be parallel to but spaced radially apart from the input axis 40. The third bearing 72 can be received onto the intermediate shaft 16, abutted against a third shoulder 76 (Fig. 5) formed on the intermediate shaft 16 and fixed to the intermediate shaft 16 to inhibit or limit axial movement of the third bearing 72 along the intermediate shaft 16 by a third retaining ring 78 (Fig. 5). Similarly, the fourth bearing 74 can be received onto the intermediate shaft 16, abutted against a fourth shoulder 80 (Fig. 5) that is axially spaced along the intermediate axis 70 from the third shoulder 76, and fixed to the intermediate shaft 16 to inhibit or limit axial movement of the fourth bearing 74 along the intermediate shaft 16 by a fourth retaining ring 82 (Fig. 5). The third bearing 72 can be received into a third annular pocket 86, which is formed into the first housing member 30, while the fourth bearing 74 can be received into a fourth annular pocket 88 that is formed in the second housing member 32. In the example provided, the third bearing 72 is a ball bearing, while the fourth bearing 74 is a roller bearing.

The output shaft 18 can be rotatably supported relative to the housing 12 about an output axis 90 by a fifth bearing 92 and a sixth bearing 94. The output axis 90 can be parallel to the input axis 40 as well as parallel to but spaced radially apart from the intermediate axis 70. If desired, the output axis 90 can be rotationally offset from the input axis 40 about the intermediate axis 70. In the example provided, however, the output axis 90 is coincident with the input axis 40. The fifth bearing 92 can be received onto the intermediate shaft 16, abutted against a fifth shoulder 96 (Fig. 5) formed on the output shaft 18 and fixed to the output shaft 18 to inhibit or limit axial movement of the fifth bearing 92 along the output shaft 18 by a fifth retaining ring 98 (Fig. 5). Similarly, the sixth bearing 94 can be received onto the output shaft 18, abutted against a sixth shoulder 100 (Fig. 5) that is axially spaced along the output axis 90 from the fifth shoulder 96, and fixed to the output shaft 18 to inhibit or limit axial movement of the sixth bearing 94 along the output shaft 18 by a sixth retaining ring 102 (Fig. 5). The fifth bearing 92 can be received into a fifth annular pocket 104 (Fig. 5) that is formed in the bearing plate 34, while the sixth bearing 94 can be received into a sixth annular pocket 106 (Fig. 1), which is formed into the first and second housing members 30 and 32. In the example provided, the fifth bearing 92 is a ball bearing, while the sixth bearing 94 is a roller bearing.

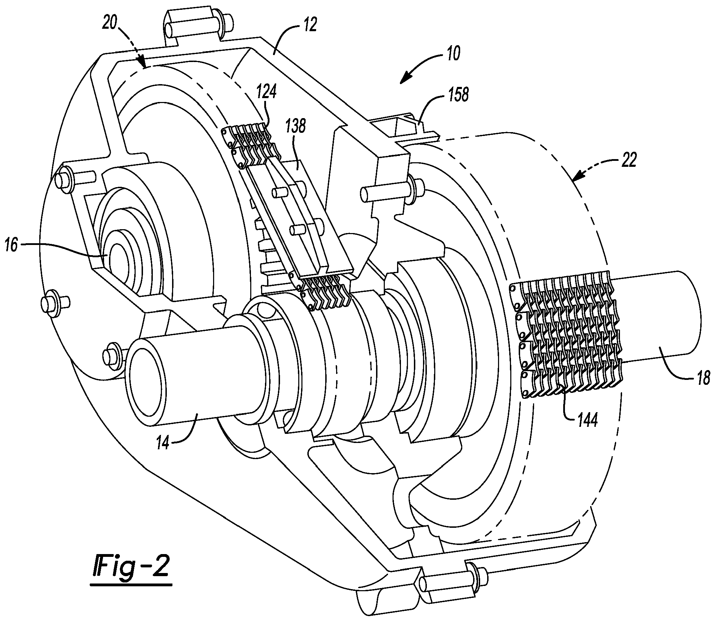

With specific reference to Figure 5, the first reduction drive 20 can comprise a first sprocket 120, which can be coupled to the input shaft 14 for rotation therewith, a second sprocket 122, which can be coupled to the intermediate shaft 16 for rotation therewith, and a first chain 124. In the example provided, the first sprocket 120 is unitarily and integrally formed with the input shaft 14 at a location that is disposed along the input axis 40 between the first and second bearings 42 and 44. It will be appreciated, however, that the first sprocket 120 could be a discrete component that could be assembled to input shaft 14. The second sprocket 122, which is larger in diameter than the first sprocket 120, is a discrete component that is assembled to the intermediate shaft 16 in the example provided. The second sprocket 122 can be received onto a first hub portion 130 formed on the intermediate shaft 16 between an inner bearing race 132 of the third bearing 72 and a seventh shoulder 134 that is formed on the intermediate shaft 16. The second sprocket 122 can be coupled to the first hub portion 130 in any desired manner, such as mating internal and external splines formed into the second sprocket 122 and the first hub portion 130, respectively, a press or interference fit between the second sprocket 122 and the first hub portion 130, and/or one or more welds, for example. The first chain 124 can be disposed about the first and second sprockets 120 and 122 and can transmit rotary power from the first sprocket 120 to the second sprocket 122. Optionally, a pair of snubbers 138 (Fig. 2 - only one shown) or tensioners can be coupled to the housing 12 (Fig. 2) and can be employed to control motion of the first chain 124.

The second reduction drive 22 can comprise a third sprocket 140, which can be coupled to the intermediate shaft 16 for rotation therewith, a fourth sprocket 142, which can be coupled to the output shaft 18 for rotation therewith, and a second chain 144. In the example provided, the third and fourth sprockets 140 and 142 are discrete components that are assembled to the intermediate shaft 16 and the output shaft 18, respectively. The third sprocket 140 can be received onto a second hub portion 150 formed on the intermediate shaft 16 between an inner bearing race 152 of the fourth bearing 74 and an eighth shoulder 154 that is formed on the intermediate shaft 16. The third sprocket 140 can be coupled to the second hub portion 150 in any desired manner, such as mating internal and external splines formed into the third sprocket 140 and the second hub portion 150, respectively, and/or one or more welds, for example. The fourth sprocket 142, which is larger in diameter than the third sprocket 140, is a discrete component that is assembled to the output shaft 18 in the example provided. The fourth sprocket 142 can be received onto a third hub portion 160 formed on the output shaft 18 between an inner bearing race 162 of the fifth bearing 92 and a ninth shoulder 164 that is formed on the output shaft 18. The fourth sprocket 142 can be coupled to the third hub portion 160 in any desired manner, such as mating internal and external splines formed into the fourth sprocket 142 and the third hub portion 160, respectively, and/or one or more welds, for example. The second chain 144 can be disposed about the third and fourth sprockets 140 and 142 and can transmit rotary power from the third sprocket 140 to the fourth sprocket 142. Optionally, a pair of snubbers 158 (Fig. 2 - only one shown) or tensioners can be coupled to the housing 12 (Fig. 2) and can be employed to control motion of the second chain 144.

If desired, one or more oil distribution holes 170 can be formed into the bearing plate 34. The oil distribution hole(s) 170 can be configured to direct lubricant slung during operation to the second and fifth bearings 44 and 92.

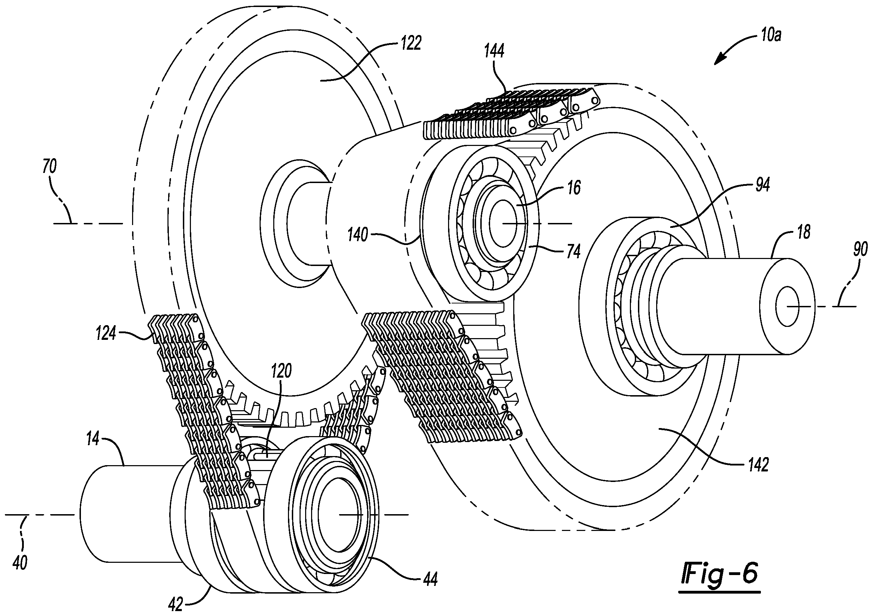

The exemplary drive module 10a of Figure 6 can be generally similar to the drive module of the previously described example except that the output axis 90 is depicted as being rotated about the intermediate axis 70 from the input axis 40 (i.e., the output axis 90 is not coincident with the input axis 40 in this example). It will be appreciated that the housing (not shown) of the drive module 10a need not include the bearing plate 34 (Fig. 5).

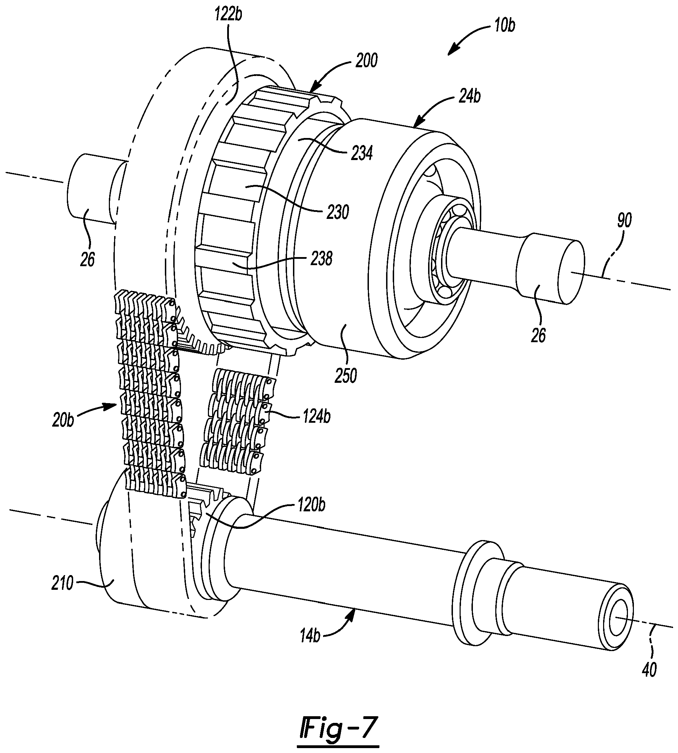

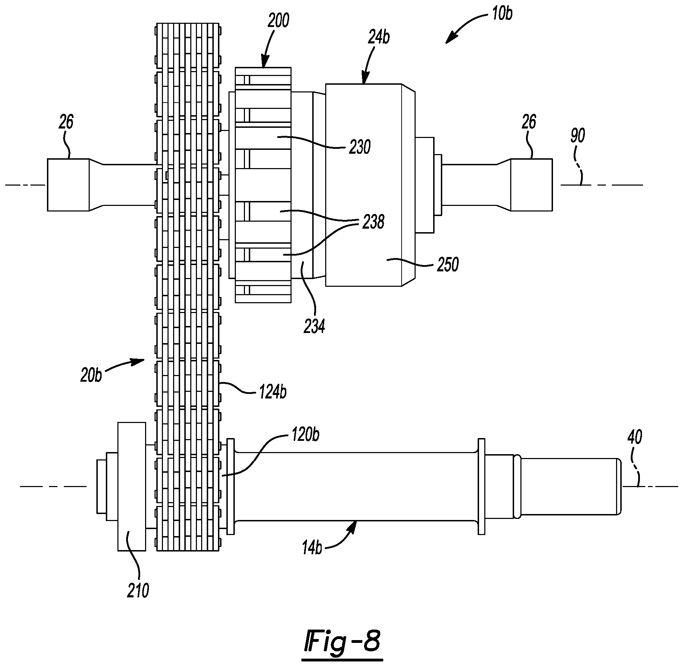

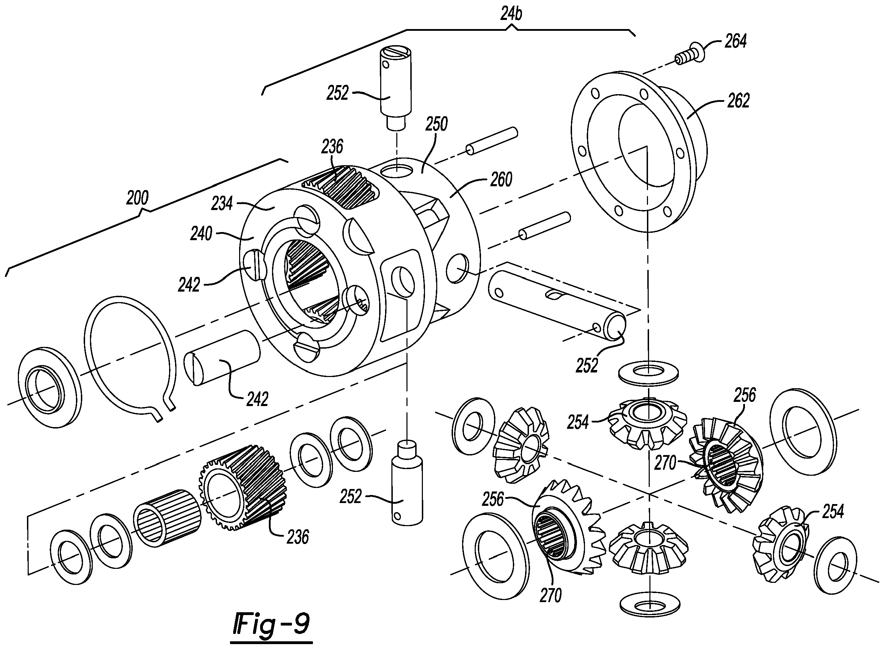

With reference to Figures 7 through 9, a portion of another drive module 10b constructed in accordance with the teachings of the present disclosure is illustrated. The drive module 10b can include an input shaft 14b, a reduction drive 20b, a reduction gear drive 200, a differential 24b and a pair of half shafts 26.

The input shaft 14b can be disposed for rotation about an input axis 40 and can be supported relative to a housing (not shown) via a bearing 210. The input shaft 14b can be coupled to a source of rotary power, such as an electric motor (not shown).

The reduction drive 20b can include a first sprocket 120b, a second sprocket 122b and a chain 124b. The first sprocket 120b can be coupled to the input shaft 14b for rotation therewith. The second sprocket 122b can be supported in the housing for rotation about an output axis 90. The chain 124b can be meshingly engaged with the first and second sprockets 120b and 122b to transfer rotary power therebetween.

The reduction gear drive 200 can be a planetary transmission having a ring gear 230, a sun gear (not specifically shown), a planet carrier 234 and a plurality of planet gears 236. The ring gear 230 is an annular structure that can be disposed concentrically about the output axis 90 and can be fixedly coupled to the housing. In the example provided, a plurality of external teeth 238 are formed onto the ring gear 230 that meshingly engage corresponding teeth (not shown) formed on the housing. The sun gear can be coupled to the second sprocket 122b for rotation therewith about the output axis 90. The planet carrier 234 can include a carrier body 240 and a plurality of carrier pins 242 that are circumferentially spaced apart about the carrier body 240 and fixedly coupled to the carrier body 240. The planet gears 236 are meshingly engaged with the ring gear 230 and the sun gear. Each of the planet gears 236 is rotatably received on a corresponding one of the carrier pins 242. The sun gear and the planet carrier 234 are the input and output, respectively, of the reduction gear drive 200 in the example provided, but it will be appreciated that the reduction gear drive 200 could be constructed differently.

The differential 24b in the example provided comprises a differential case 250, a plurality of cross-pins 252, a plurality of differential pinions 254 and a pair of side gears 256. The differential case 250 can be coupled to the planet carrier 234 for rotation therewith about the output axis 90. In the example provided, differential case 250 includes a case member 260 and a cap 262 that is fixedly but removably coupled to the case member 260 via a plurality of threaded fasteners 264, and the carrier body 240 is unitarily and integrally formed with the case member 260. The cross-pins 252 can be fixedly coupled to differential case 250 along axes that are orthogonal to the output axis 90. The differential pinions 254 can be rotatably received on the cross-pins 252 in a cavity (not specifically shown) that is defined by the differential case 250. Each of the side gears 256 can be received in the cavity and can be meshingly engaged with the differential pinions 254. Each of the side gears 256 can define an internally splined output portion 270 that can correspondingly engage an externally splined input portion (not specifically shown) on a corresponding one of the half shafts 26.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A drive module comprising:
a housing (12) having a first housing member (30) and a second housing member (32) that is fixedly but removably coupled to the first housing member, the first and second housing members cooperating to define an internal cavity (38);
an input shaft (14) supported in the housing for rotation about a first axis;
a first sprocket (120) coupled to the input shaft for rotation therewith;
an intermediate shaft (16) supported in the housing for rotation about a second axis that is parallel to the first axis;
a second sprocket (122) coupled to the intermediate shaft for rotation therewith;
a first chain (124) disposed about and engaging the first and second sprockets, wherein the first sprocket, the second sprocket and the first chain provide a first reduction ratio;
a third sprocket (140) coupled to the intermediate shaft for rotation therewith;
an output member (18) supported in the housing for rotation about a third axis that is parallel to the second axis;
a fourth sprocket (142) coupled to the output member for rotation therewith;
a second chain (144) disposed about and engaging the third and fourth sprockets, wherein the third sprocket, the fourth sprocket and the second chain provide a second reduction ratio; and
wherein the first and third axes are coincident;
**characterized in that**
the housing further comprises a bearing plate (34) that defines a first annular bearing pocket (58) and a second annular bearing pocket (104), wherein a first bearing (44) is received in the first annular bearing pocket and supports the input shaft for rotation about the third axis, wherein a second bearing (92) is received in the second annular bearing pocket (58) and supports the output member for rotation about the third axis, and wherein a plurality of threaded fasteners (36) fixedly but removably couple the bearing plate to the first housing member.

2. The drive module of Claim 1, wherein the second annular pocket is larger in diameter than the first bearing pocket.

3. The drive module of Claim 1, wherein at least one oil distribution hole (170) is formed through the bearing plate, the at least one oil distribution hole intersecting the second annular bearing pocket.

4. The drive module of Claim 1, wherein the fourth sprocket is disposed on the output member between the second bearing and a third bearing (94), and wherein the third bearing is a roller bearing that is received into the second housing member.

5. The drive module of Claim 4, wherein the second and third sprockets are disposed on the intermediate shaft between a fourth bearing (72), which is mounted to the first housing member, and a fifth bearing (74) that is mounted to the second housing member, and wherein the fifth bearing is a roller bearing.

6. The drive module of Claim 1, further comprising an electric motor (60) that is fixedly coupled to the housing, the electric motor having a rotor (62) that is drivingly coupled to the input shaft.

7. The drive module of Claim 6, wherein the rotor is hollow.

8. The drive module of Claim 7, further comprising a differential (24) and a pair of axle shafts (26), received in the housing, the differential being driven by the output member and outputting power to the axle shafts, wherein one of the axle shafts extends through the rotor.

9. A drive module comprising:
a housing (12) having a first housing member (30) and a second housing member (32) that is fixedly but removably coupled to the first housing member, the first and second housing members cooperating to define an internal cavity (38);
a first shaft (14b) supported in the housing for rotation about a first axis;
a first sprocket (120b) coupled to the input shaft for rotation therewith;
a second sprocket (122b) supported in the housing for rotation about a second axis that is parallel to the first axis;
a first chain (124b) disposed about and engaging the first and second sprockets, wherein the first sprocket, the second sprocket and the first chain provide a first reduction ratio;
**characterized by**
a reduction gear drive (200) having a reduction drive input, which is driven by the second sprocket, and a reduction drive output;
a differential (24b) having a differential input (250) and a pair of differential outputs (256), the differential input being rotatably coupled to the reduction drive output, each of the differential outputs being rotatable about the second axis; and
a pair of output shafts (26), each of the output shafts being rotatably coupled to an associated one of the differential outputs.

10. The drive module of Claim 9, wherein the differential input is a differential case and the differential outputs are side gears.

11. The drive module of Claim 10, wherein the differential further comprises a cross-pin (252), which is mounted to the differential case for rotation therewith, and a plurality of differential pinions (254) that are rotatably received on the cross-pin and meshingly engaged with the side gears.

12. The drive module of Claim 11, wherein the reduction gear drive is a planetary reduction having a plurality of planet gears (236), which are circumferentially spaced about the second axis and rotatably coupled to the differential case, and a ring gear (300) that is non-rotatably coupled to the housing.

## Patentansprüche

1. Antriebsmodul, umfassend:
ein Gehäuse (12), das ein erstes Gehäuseelement (30) und ein zweites Gehäuseelement (32) aufweist, das fest, jedoch lösbar mit dem ersten Gehäuseelement gekoppelt ist, wobei das erste und das zweite Gehäuseelement zusammenwirken, um einen inneren Hohlraum (38) zu definieren,
eine Eingangswelle (14), die zur Drehung um eine erste Achse in dem Gehäuse gelagert ist,
ein erstes Kettenrad (120), das zur Drehung mit der Eingangswelle mit derselben gekoppelt ist,
eine Zwischenwelle (16), die zur Drehung um eine parallel zu der ersten Achse verlaufenden zweiten Achse in dem Gehäuse gelagert ist,
ein zweites Kettenrad (122), das zur Drehung mit der Zwischenwelle mit derselben gekoppelt ist,
eine erste Kette (124), die um die ersten und zweiten Kettenräder angeordnet ist und mit denselben eingreift, wobei das erste Kettenrad, das zweite Kettenrad und die erste Kette ein erstes Untersetzungsverhältnis bereitstellen,
ein drittes Kettenrad (140), das zur Drehung mit der Zwischenwelle mit derselben gekoppelt ist,
ein Ausgangselement (18), das zur Drehung um eine parallel zu der zweiten Achse verlaufende dritte Achse in dem Gehäuse gelagert ist,
ein viertes Kettenrad (142), das zur Drehung mit dem Ausgangselement mit demselben gekoppelt ist,
eine zweite Kette (144), die um das dritte und das vierte Kettenrad angeordnet ist und mit denselben eingreift, wobei das dritte Kettenrad, das vierte Kettenrad und die zweite Kette ein zweites Untersetzungsverhältnis bereitstellen, und
wobei die erste und die dritte Achse koinzident sind,
**dadurch gekennzeichnet, dass**
das Gehäuse ferner eine Lagerplatte (34) umfasst, die eine erste ringförmige Lageraussparung (58) und eine zweite ringförmige Lageraussparung (104) definiert, wobei ein erstes Lager (44) in der ersten ringförmigen Lageraussparung aufgenommen ist und die Eingangswelle zur Drehung um die dritte Achse hält, wobei ein zweites Lager (92) in der zweiten ringförmigen Lageraussparung (58) aufgenommen ist und das Ausgangselement zur Drehung um die dritte Achse hält und wobei eine Mehrzahl von mit einem Gewinde versehenen Befestigungsvorrichtungen (36) die Lagerplatte fest, jedoch lösbar mit dem ersten Gehäuseelement koppelt.

2. Antriebsmodul nach Anspruch 1, wobei die zweite ringförmige Aussparung einen größeren Durchmesser als die erste Lageraussparung aufweist.

3. Antriebsmodul nach Anspruch 1, wobei zumindest ein Ölverteilungsloch (170) durch die Lagerplatte ausgebildet ist, wobei das zumindest eine Ölverteilungsloch die zweite ringförmige Lageraussparung schneidet.

4. Antriebsmodul nach Anspruch 1, wobei das vierte Kettenrad zwischen dem zweiten Lager und einem dritten Lager (94) an dem Ausgangselement angeordnet ist und wobei das dritte Lager ein Wälzlager ist, das in dem zweiten Gehäuseelement aufgenommen ist.

5. Antriebsmodul nach Anspruch 4, wobei die zweiten und dritten Kettenräder zwischen einem vierten Lager (72), das an dem ersten Gehäuseelement befestigt ist, und einem fünften Lager (74), das an dem zweiten Gehäuseelement befestigt ist, an der Zwischenwelle angeordnet sind und wobei das fünfte Lager ein Wälzlager ist.

6. Antriebsmodul nach Anspruch 1, ferner umfassend einen Elektromotor (60), der fest mit dem Gehäuse gekoppelt ist, wobei der Elektromotor einen Rotor (62) aufweist, der auf antreibende Weise mit der Eingangswelle gekoppelt ist.

7. Antriebsmodul nach Anspruch 6, wobei der Rotor hohl ist.

8. Antriebsmodul nach Anspruch 7, ferner umfassend ein Differentialgetriebe (24) und ein Paar von Achswellen (26), das in dem Gehäuse aufgenommen ist, wobei das Differenzialgetriebe von dem Ausgangselement angetrieben wird und Leistung an die Achswellen ausgibt, wobei sich eine der Achswellen durch den Rotor erstreckt.

9. Antriebsmodul, umfassend:
ein Gehäuse (12), das ein erstes Gehäuseelement (30) und ein zweites Gehäuseelement (32) aufweist, das fest, jedoch lösbar mit dem ersten Gehäuseelement gekoppelt ist, wobei die ersten und zweiten Gehäuseelemente zusammenwirken, um einen inneren Hohlraum (38) zu definieren,
eine erste Welle (14b), die zur Drehung um eine erste Achse in dem Gehäuse gelagert ist,
ein erstes Kettenrad (120b), das zur Drehung mit der Eingangswelle mit derselben gekoppelt ist,
ein zweites Kettenrad (122b), das zur Drehung um eine parallel zu der ersten Achse verlaufenden zweiten Achse in dem Gehäuse gelagert ist,
eine erste Kette (124b), die um die ersten und zweiten Kettenräder angeordnet ist und mit denselben eingreift, wobei das erste Kettenrad, das zweite Kettenrad und die erste Kette ein erstes Untersetzungsverhältnis bereitstellen,
**gekennzeichnet durch**
ein Untersetzungsgetriebe (200), das einen Untersetzungsgetriebeeingang, der von dem zweiten Kettenrad angetrieben wird, und einen Untersetzungsgetriebeausgang aufweist,
ein Differential (24b), das einen Differentialeingang (250) und ein Paar von Differentialausgängen (256) aufweist, wobei der Differentialeingang auf drehbare Weise mit dem Untersetzungsgetriebeausgang gekoppelt ist, wobei die Differentialausgänge jeweils um die zweite Achse drehbar sind, und
ein Paar von Ausgangswellen (26), wobei die Ausgangswellen jeweils auf drehbare Weise mit einem zugehörigen der Differentialausgänge gekoppelt sind.

10. Antriebsmodul nach Anspruch 9, wobei der Differential eingang ein Differentialgehäuse ist und die Differentialausgänge Achswellenräder sind.

11. Antriebsmodul nach Anspruch 10, wobei das Differential ferner einen Kreuzzapfen (252), der zur Drehung mit dem Differentialgehäuse an demselben befestigt ist, und eine Mehrzahl von Differentialritzel (254) umfasst, die auf drehbare Weise an dem Kreuzzapfen aufgenommen sind und mit den Achswellenrädern eingreifen.

12. Antriebsmodul nach Anspruch 11, wobei das Untersetzungsgetriebe eine Planetenuntersetzung ist, die eine Mehrzahl von Planetenrädern (236), die in Umfangsrichtung um die zweite Achse beabstandet und auf drehbare Weise mit dem Differentialgehäuse gekoppelt sind, und ein Hohlrad (300), das auf nicht drehbare Weise mit dem Gehäuse gekoppelt ist, aufweist.

## Revendications

1. Module d'entraînement comprenant :
un carter (12) ayant un premier organe de carter (30) et un deuxième organe de carter (32) qui est accouplé de manière fixe mais amovible au premier organe de carter, les premier et deuxième organes de carter coopérant pour définir une cavité interne (38) ;
un arbre d'entrée (14) supporté dans le carter pour une rotation autour d'un premier axe ;
un premier pignon (120) accouplé à l'arbre d'entrée pour la rotation avec celui-ci ;
un arbre intermédiaire (16) supporté dans le carter pour la rotation autour d'un deuxième axe qui est parallèle au premier axe ;
un deuxième pignon (122) accouplé à l'arbre intermédiaire pour la rotation avec celui-ci ;
une première chaîne (124) disposée autour des premier et deuxième pignons et venant en prise avec ceux-ci, le premier pignon, le deuxième pignon et la première chaîne produisant un premier rapport de réduction ;
un troisième pignon (140) accouplé à l'arbre intermédiaire pour la rotation avec celui-ci ;
un organe de sortie (18) supporté dans le carter pour la rotation autour d'un troisième axe qui est parallèle au deuxième axe ;
un quatrième pignon (142) accouplé à l'organe de sortie pour la rotation avec celui-ci ; une deuxième chaîne (144) disposée autour des troisième et quatrième pignons et venant en prise avec ceux-ci, le troisième pignon, le quatrième pignon et la deuxième chaîne produisant un deuxième rapport de réduction ; et
les premier et troisième axes étant coïncidents ;
**caractérisé en ce que**
le carter comprend en outre une plaque de palier (34) qui définit une première poche de palier annulaire (58) et une deuxième poche de palier annulaire (104), un premier palier (44) étant reçu dans la première poche de palier annulaire et supportant l'arbre d'entrée pour la rotation autour du troisième axe, un deuxième palier (92) étant reçu dans la deuxième poche de palier annulaire (58) et supportant l'organe de sortie pour la rotation autour du troisième axe, et une pluralité d'éléments de fixation filetés (36) accouplant de manière fixe mais amovible la plaque de palier au premier organe de carter.

2. Module d'entraînement selon la revendication 1, dans lequel la deuxième poche annulaire est de plus grand diamètre que la première poche de palier.

3. Module d'entraînement selon la revendication 1, dans lequel au moins un trou de distribution d'huile (170) est formé à travers la plaque de palier, l'au moins un trou de distribution d'huile croisant la deuxième poche de palier annulaire.

4. Module d'entraînement selon la revendication 1, dans lequel le quatrième pignon est disposé sur l'organe de sortie entre le deuxième palier et un troisième palier (94), et dans lequel le troisième palier est un palier à rouleaux qui est reçu dans le deuxième organe de carter.

5. Module d'entraînement selon la revendication 4, dans lequel les deuxième et troisième pignons sont disposés sur l'arbre intermédiaire entre un quatrième palier (72), qui est monté sur le premier organe de carter, et un cinquième palier (74) qui est monté sur le deuxième organe de carter, et dans lequel le cinquième palier est un palier à rouleaux.

6. Module d'entraînement selon la revendication 1, comprenant en outre un moteur électrique (60) qui est accouplé de manière fixe au carter, le moteur électrique ayant un rotor (62) qui est accouplé par entraînement à l'arbre d'entrée.

7. Module d'entraînement selon la revendication 6, dans lequel le rotor est creux.

8. Module d'entraînement selon la revendication 7, comprenant en outre un différentiel (24) et une paire d'arbres d'essieu (26), reçus dans le carter, le différentiel étant entraîné par l'organe de sortie et fournissant une puissance aux arbres d'essieu, dans lequel l'un des arbres d'essieu s'étend à travers le rotor.

9. Module d'entraînement comprenant :
un carter (12) ayant un premier organe de carter (30) et un deuxième organe de carter (32) qui est accouplé de manière fixe mais amovible au premier organe de carter, les premier et deuxième organes de carter coopérant pour définir une cavité interne (38) ;
un premier arbre (14b) supporté dans le carter pour une rotation autour d'un premier axe ;
un premier pignon (120b) accouplé à l'arbre d'entrée pour la rotation avec celui-ci ;
un deuxième pignon (122b) supporté dans le carter pour une rotation autour d'un deuxième axe qui est parallèle au premier axe ;
une première chaîne (124b) disposée autour des premier et deuxième pignons et venant en prise avec ceux-ci, le premier pignon, le deuxième pignon et la première chaîne produisant un premier rapport de réduction ; **caractérisé par**
un entraînement par engrenage réducteur (200) ayant une entrée d'entraînement de réduction, qui est entraînée par le deuxième pignon, et une sortie d'entraînement de réduction ;
un différentiel (24b) ayant une entrée de différentiel (250) et une paire de sorties de différentiel (256), l'entrée de différentiel étant accouplée de manière rotative à la sortie d'entraînement de réduction, chacune des sorties de différentiel pouvant tourner autour du deuxième axe ; et
une paire d'arbres de sortie (26), chacun des arbres de sortie étant accouplé de manière rotative à une sortie associée parmi les sorties de différentiel.

10. Module d'entraînement selon la revendication 9, dans lequel l'entrée de différentiel est un boîtier de différentiel et les sorties de différentiel sont des engrenages latéraux.

11. Module d'entraînement selon la revendication 10, dans lequel le différentiel comprend en outre une goupille transversale (252), qui est montée sur le boîtier de différentiel pour une rotation avec celui-ci, et une pluralité de pignons différentiels (254) qui sont reçus de manière rotative sur la goupille transversale et en prise par engrènement avec les engrenages latéraux.

12. Module d'entraînement selon la revendication 11, dans lequel l'entraînement par engrenage réducteur est une réduction planétaire ayant une pluralité de roues planétaires (236), qui sont espacées circonférentiellement autour du deuxième axe et accouplées de manière rotative au boîtier de différentiel, et une couronne (300) qui est accouplée de manière non rotative au carter.
